# EUROPÄISCHE PATENTANMELDUNG

(11) **EP 2 051 130 A2**
(43) Veröffentlichungstag der Anmeldung: **22.04.2009**
(21) Anmeldenummer: 08017433.7
(22) Anmeldetag: 04.10.2008
(51) Int. Cl.: G02F 1/1333, G09F 9/35, A47F 3/00

(54) **Vorrichtung zur Präsentation von zumindest einem im Blickfeld eines Betrachters angeordneten Objekt**

(30) Priorität: 19.10.2007 DE 102007050082
(71) Anmelder: Wammes, Klaus, 67595 Bechtheim (DE)
(72) Erfinder: Wammes, Klaus, 67595 Bechtheim (DE)
(74) Vertreter: Moldenhauer, Herbert

(57) **Zusammenfassung**

Eine Vorrichtung zur Präsentation zumindest von zumindest einem im Blickfeld eines Betrachters angeordneten Objektes (1), das von dem Betrachter durch eine transparente Scheibe (2) getrennt ist, die aus einem zur Wiedergabe von beliebigen Bildinhalten geeignetes LCD - Display (3) besteht und eine Flüssigkristall - Zwischenschicht (3) umfasst, die zwischen einem Polarisator (5) und einem Analysator (6) angeordnet ist, wobei das LCD - Display (3) innerhalb des Blickfeldes zumindest einen von dem LCD - Display (3) abgegrenzten Bildausschnitt (7) umfasst, der transparent gestaltet ist und wobei die Wiedergabe der Bildinhalte in den außerhalb des Bildausschnittes (7) liegenden Bereichen des LCD - Displays (3) im wesentlichen unbeeinträchtigt ist.

## Beschreibung

### Technisches Gebiet

Die Erfindung betrifft eine Vorrichtung zur Präsentation zumindest von zumindest einem im Blickfeld eines Betrachters angeordneten Objektes, die aus einem zur Wiedergabe von Bildinhalten geeignetes LCD - Display besteht und eine Flüssigkristall - Zwischenschicht umfasst, die zwischen einem Polarisator und einem Analysator angeordnet ist. Der Polarisator und der Analysator können aus metallischen Schichten bestehen, die, bezogen auf die Flüssigkristall - Zwischenschicht, zumeist auf die nach außen weisenden Seiten der Glas- oder Kunststoffscheiben aufgedampft sind, die das LCD - Display nach außen begrenzen.

### Stand der Technik

Eine solche Vorrichtung ist aus der DE 10205405A1 bekannt. Sie besteht aus einem Fensterelement, das in einem ersten Zustand bei eingeschaltetem Display eine Wiedergabe von Bildelementen erlaubt und das in einem zweiten Zustand bei ausgeschaltetem Display eine Durchsicht durch das plattenförmige Display hindurch ermöglicht und somit das Betrachten eines hinter dem Display befindlichen Objektes oder Bildes.

### Darstellung der Erfindung

Der Erfindung liegt die Aufgabe zu Grunde, eine solche Vorrichtung derart weiter zu entwickeln, dass sich erweiterte Anwendungsmöglichkeiten ergeben.

Diese Aufgabe wird erfindungsgemäß bei einer Vorrichtung nach dem Oberbegriff durch die kennzeichnenden Merkmale von Anspruch 1 gelöst. Auf vorteilhafte Weiterbildungen nehmen die Unteransprüche Bezug.

Bei der erfindungsgemäßen Vorrichtung ist das LCD - Display zur Wiedergabe von bewegten Bildern ausgelegt und es umfasst innerhalb des Blickfeldes des Betrachters zumindest einen von dem LCD - Display abgegrenzten Bildausschnitt, der von dem Betrachter nur durch eine transparente Scheibe getrennt ist und der die Wiedergabe der Bildinhalte in den außerhalb des Bildausschnittes liegenden Bereichen des LCD - Displays nicht beeinträchtigt.

Der Bildausschnitt ist hinsichtlich seiner Transparenz nicht durch Elementen eines LCD - Displays beeinträchtigt. Dadurch gelingt eine ausgezeichnete und sehr helle Ausleuchtung des auszustellenden Objektes, ohne dass es besonders heller und damit heißer Lichtquellen bedarf. Teure Kaltlichtquellen sind entbehrlich und auch wärmeempfindliche Objekte können sehr gut präsentiert werden.

Der transparente Bildausschnitt kann auch allseitig von dem LCD - Display umschlossen sein, was es erlaubt, in dem Bildlausschnitt körperliche Objekte oder Bilder ansprechend zu präsentieren und die Präsentation durch bewegte Bilder oder graphische Darstellungen zu unterstützen, die parallel hierzu auf dem LCD Display erscheinen. Für viele Anwendungen ist eine solche Kombination der Darbietung innerhalb derselben Präsentation von großem Vorteil. Auch technische Anwendungen, beispielsweise die körperliche Wiedergabe der sich bewegenden Tachonadel des Geschwindigkeitsmessers eines Kraftfahrzeuges in einem transparenten Bildausschnitt, der von einem LCD - Display umschlossen ist, das technische Informationen und/oder Navigationsangaben enthält, sind problemlos möglich.

Die Anwendung der Erfindung ist bei vielen Bauformen von LCD - Displays grundsätzlich möglich. TN -, STN -, DSTN -, TSTN -, TFT -, IPS -, MVA -, PVA - und FFS - Displays sowie deren Abwandlungen und/oder Weiterentwicklungen können hinsichtlich der Lichtdurchlässigkeit so modifiziert werden, dass Licht in Durchlassrichtung nicht polarisiert und/oder die auftretende Polarisation kompensiert und/oder eine auftretende Polarisation für eine hinreichend gute Präsentation des Objektes unerheblich ist.

Dies kann beispielsweise durch Gleichausrichten von Polarisator und Analysator bei gleichzeitig geeigneter Ansteuerung des lichtdrehenden Flüssigkristalls in der Flüssigkristall-Zwischenschicht geschehen und/oder durch Entfernen der o.g. Flüssigkristall -Zwischenschicht in den gewünschten Bereichen und/oder durch chemisch-physikalische Verfahren und/oder physikalische Einflüsse, die eine Veränderung im Flüssigkristallmaterial hervorrufen, um deren Doppelbrechungseigenschaften zu reduzieren und/oder zu eliminieren und/oder durch Modifizieren und/oder Ersetzen und/oder Entfernen der Licht polarisierenden Eigenschaften von Polarisator und/oder Analysator und/oder durch mechanisches Heraustrennen von LCD-Flächen vor dem oder den Objekten und/oder beliebigen Kombinationen aus den vorgenannten Möglichkeiten.

Der Bildausschnitt kann in Abhängigkeit von der Form, Größe und Art der zu präsentierenden Objekte rechteckig, kreisförmig, oval und/oder polygonförmig begrenzt ausgebildet sein.

Für eine ansprechende Präsentation von Schmuckstücken, Uhren oder ähnlichen Objekten hat es sich als vorteilhaft bewährt, wenn mehrere Bildausschnitte zwischen dem Betrachter und den jeweils dahinter angeordneten Objekten vorgesehen sind, die alternativ und/oder parallel zu einander transparent gestaltet sind.

Mehrere Bildausschnitte können dabei auch musterartig auf der Fläche des LCD - Displays verteilt angeordnet sein.

Das LCD - Display ist zweckmäßig als Bildschirm ausgebildet und zur Darstellung von bewegten Bildern oder Graphiken geeignet.

Das Objekt aus einem dreidimensionalen, räumlichen Körper oder einem zweidimensionalen Bild bestehen, der oder das durch die Flüssigkristall - Zwischenschicht des LCD - Displays hindurch beleuchtbar ist.

Das Objekt kann auch durch eine Hintergrundbeleuchtung des LCD-Displays beleuchtbar sein.

Auch reflektiv betreibbare LCD's sind geeignet für diese Anwendungen.

Das Objekt und das LCD - Display können unabhängig und/oder parallel zu einander auch mit einer oder mehreren beliebig farbigen Lichtquelle beleuchtbar ausgebildet sein, um in Hinblick auf Anwendungen auf dem Gebiet der Werbung und/oder Präsentation besondere Effekte erzielen zu können. Dabei ist es von besonderem Vorteil, wenn die Lichtquelle eine steuer- und /oder regelbare Lichtstärke und/oder Lichtfarbe hat.

Dass Objekt kann innerhalb des Bildausschnittes auf das LCD - Display projizierbar sein, um es vom Betrachtungswinkel unabhängig sehr gut wahrnehmen zu können.

Das Objekt und/oder das LCD - Display können in Abhängigkeit vom Blickwinkel des Betrachters unterschiedlich erkennbar sein.

Es können auch unterschiedliche Informationen und/oder Bilder je nach gewähltem Blickwinkel auf dem LCD und/oder dem Objekt darstellbar und/oder erkennbar sein.

Dies bietet die Möglichkeit, dass das LCD - Display parallel zueinander und in Abhängigkeit von der jeweiligen Größe des Blickwinkels des Betrachters von einander verschiedene Informationen und/oder Bildinhalte wiedergibt.

### Kurzbeschreibung der Zeichnung

Eine beispielhafte Ausführung der Erfindung ist in der beiliegenden Zeichnung dargestellt. Sie wird nachfolgend näher erläutert.

### Es zeigen:

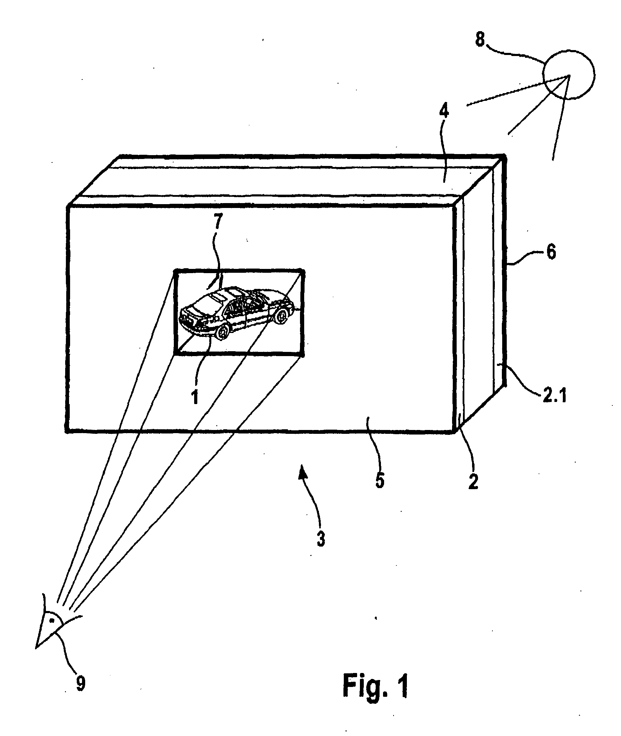

- Fig. 1: eine Vorrichtung in einer perspektivischen Darstellung von vorn.

### Ausführung der Erfindung

Die dargestellte Vorrichtung ist zur Präsentation eines im Blickfeld eines Betrachters 9 angeordneten Objektes 1, bestimmt, dass hier durch ein in eiern Vitrine aufgenommenes Modellauto gebildet ist. Das Modellauto ist von dem Betrachter durch eine der transparenten Scheiben 2, 2.1 getrennt, die einen Bestandteil eines zur Wiedergabe von beliebigen Bildinhalten geeigneten LCD - Displays 3 bilden und eine Flüssigkristall - Zwischenschicht 4 begrenzen, die die zwischen den transparenten Scheiben 2, 2.1 angeordnet ist. Die Scheiben 2, 2.1 sind zur Bildung eines Polarisators 5 und eines Analysators 6 mit transparenten Metallschichten bedampft. Der Polarisator 5 und der Analysator 6 sind, bezogen auf die Flüssigkristall - Zwischenschicht 4, zumeist auf den nach außen weisenden Seiten der transparenten Glas- oder Kunststoffscheiben 2, 2.1 angeordnet. Statt des dreidimensionalen Körpers des Modellautos kann auch eine zweidimensionale Bilddarstellung in der nicht gezeigten Vitrine aufgenommen sein.

Das LCD - Display 3 umfasst innerhalb des Blickfeldes des Betrachters einen von dem eigentlichen, zur eigenen Bildwiedergabe geeigneten Teil des LCD - Displays 3, abgegrenzten Bildausschnitt 7, der transparent gestaltet ist, wobei die Wiedergabe der Bildinhalte in den außerhalb des Bildausschnittes 7 liegenden Bereichen des LCD - Displays 3 im wesentlichen unbeeinträchtigt ist.

Der Bildausschnitt 7 ist in diesem Beispiel rechteckig begrenzt. Andere Formen von Bildausschnitten können ebenfalls verwendet werden.

Naturgemäß können mehrere Bildausschnitte 7 zwischen dem Betrachter und jeweils dahinter angeordneten Objekten 1 vorgesehen sein, die alternativ und/oder parallel zu einander transparent gestaltet sind, um mehrere Objekte darbieten zu können, beispielsweise verschiedene Schmuckstücke. Die einzelnen Bildausschnitte 7 können dabei musterartig auf der Fläche des LCD - Displays 3 verteilt angeordnet sein.

Das den Bildausschnitt 7 allseits umschließende LCD - Display 3 ist in diesem Beispiel als Bildschirm ausgebildet, um Werbebotschaften in bewegter Form übermitteln und das Modellauto beispielsweise schattenfrei in unterschiedlichen Farben und/oder Helligkeiten und/oder mit unterschiedlichen Informationen je gewähltem Blickwinkel darstellen zu können.

Das Objekt 1, das hier aus einem Modellauto besteht, kann durch die Flüssigkristall-Zwischenschicht 4 hindurch beleuchtbar dargeboten werden. Hierdurch wird insbesondere vermieden, dass sich in der Zwischenzone zwischen dem Objekt und der dem Betrachter zugewandten, transparenten Glasplatte Schattenbildungen ergeben.

Das Objekt 1 kann ergänzend oder alternativ auch durch eine Hintergrundbeleuchtung des LCD-Displays 3 beleuchtbar dargeboten werden. Dies bietet sich insbesondere bei der Darbietung von zweidimensionalen Bildern oder Darstellungen an, beispielsweise bei der Darbietung von geschützten Markenzeichen o.ä.. Dabei hat es sich unter unterschiedlichen Bedingungen besonders bewährt, den erzielbaren Kontrast zwischen dargestelltem Objekt 1 und der Informationsdarstellung auf dem Display 3 anwendungsspezifisch flexibel zu gestalten, auch wenn das LCD - Display 3 reflektiv betreibbar ist.

Das Objekt 1 und das LCD - Display 3 können unabhängig und/oder parallel zu einander mit einer farbigen Lichtquelle 8 beleuchtbar ausgebildet sein, um besondere Wirkungen beim Betrachter zu erzeugen. Im einfachsten Fall kann es dabei um eine Markenfarbe mit hohem Bekanntheitsgrad gehen.

Zweckmäßig ist hat eine solche Lichtquelle eine steuer- und /oder regelbare Lichtstärke, um die Erkennbarkeit der speziellen Werbebotschaft nicht unnötig zu belasten und eine feinfühlige Abstimmung zwischen der Helligkeit des Objektes, der Umgebung sowie des Hintergrundes vornehmen zu können.

Dass Objekt 1, beispielsweise ein Bild oder eine Graphik, kann innerhalb des Bildausschnittes 7 auch in die Ebene des LCD - Display 3 projizierbar sein, um die Erkennbarkeit unter verschiedenen Bildwinkeln zu verbessern.

Das Objekt 1 und/oder das LCD - Display 3 können ferner in Abhängigkeit vom Blickwinkel des Betrachters 8 unterschiedlich erkennbar sein, was sogar die Möglichkeit eröffnet, dass das LCD - Display 3 parallel zueinander in Abhängigkeit von der Größe des jeweiligen Blickwinkels des Betrachters von einander verschiedene Informationen und/oder Bildinhalte wiedergibt, d.h. mehre Botschaften parallel zueinander.

## Patentansprüche

1. Vorrichtung zur Präsentation zumindest von zumindest einem im Blickfeld eines Betrachters angeordneten Objektes (1), die aus einem zur Wiedergabe von Bildinhalten geeignetes LCD - Display (3) besteht und eine Flüssigkristall - Zwischenschicht (3) umfasst, die zwischen einem Polarisator (5) und einem Analysator (6) angeordnet ist, **dadurch gekennzeichnet, dass** das LCD - Display (3) zur Wiedergabe von bewegten Bildern ausgelegt ist und innerhalb des Blickfeldes des Betrachters zumindest einen von dem LCD - Display (3) abgegrenzten Bildausschnitt (7) umfasst, der von dem Betrachter nur durch eine transparente Scheibe (2) getrennt ist und der die Wiedergabe der Bildinhalte in den außerhalb des Bildausschnittes (7) liegenden Bereichen des LCD - Displays (3) nicht beeinträchtigt.

2. Vorrichtung nach Anspruch 1, **dadurch gekennzeichnet, dass** der Bildausschnitt (7) rechteckig, kreisförmig, oval und/oder polygonförmig begrenzt ist.

3. Vorrichtung nach Anspruch 1 oder 2, **dadurch gekennzeichnet, dass** mehrere Bildausschnitte (7) zwischen dem Betrachter und jeweils dahinter angeordneten Objekten (1) vorgesehen sind, die alternativ und/oder parallel zu einander transparent gestaltet sind.

4. Vorrichtung nach Anspruch 3, **dadurch gekennzeichnet, dass** mehrere Bildausschnitte (7) musterartig auf der Fläche des LCD - Displays (3) verteilt sind.

5. Vorrichtung nach einem der Ansprüche 1 bis 4, **dadurch gekennzeichnet, dass** das LCD - Display (3) als Bildschirm ausgebildet ist.

6. Vorrichtung nach einem der Ansprüche 1 bis 5, **dadurch gekennzeichnet, dass** das Objekt (1) aus einem Körper oder Bild besteht, der durch die Flüssigkristall - Zwischenschicht (4) hindurch beleuchtbar ist.

7. Vorrichtung nach einem der Ansprüche 1 bis 6, **dadurch gekennzeichnet, dass** das Objekt (1) durch eine Hintergrundbeleuchtung des LCD - Displays (3) beleuchtbar ist.

8. Vorrichtung nach einem der Ansprüche 1 bis 7, **dadurch gekennzeichnet, dass** das LCD - Display (3) reflektiv betreibbar ist.

9. Vorrichtung nach einem der Ansprüche 1 bis 8, **dadurch gekennzeichnet, dass** das Objekt (1) und das LCD - Display (3) unabhängig und/oder parallel zu einander mit einer und/oder mehreren farbigen Lichtquelle (8) beleuchtbar ist.

10. Vorrichtung nach Anspruch 9, **dadurch gekennzeichnet, dass** die Lichtquelle (8) eine steuer- und /oder regelbare Lichtstärke und/oder Lichtfarbe hat.

11. Vorrichtung nach einem der Ansprüche 1 bis 8, **dadurch gekennzeichnet, dass** das Objekt (1) innerhalb des Bildausschnittes (7) auf das LCD - Display (3) projizierbar ist.

12. Vorrichtung nach einem der Ansprüche 1 bis 11, **dadurch gekennzeichnet, dass** das Objekt 1 und/oder das LCD - Display (3) in Abhängigkeit vom Blickwinkel des Betrachters (8) unterschiedlich erkennbar ist.

13. Vorrichtung nach einem der Ansprüche 1 bis 12, **dadurch**
**gekennzeichnet, dass** das LCD - Display (3) parallel zueinander in Abhängigkeit von der Größe des Blickwinkels des Betrachters von einander verschiedene Informationen und/oder Bildinhalte wiedergibt.
